# FASCICULE DE BREVET EUROPEEN

(11) **EP 3 693 636 B1**
(45) Date de publication et mention de la délivrance du brevet: **24.11.2021**
(21) Numéro de dépôt: 20156376.4
(22) Date de dépôt: 10.02.2020
(51) Int. Cl.: F16H 57/04

(54) **BOÎTE DE VITESSES POUR VÉHICULE, ET VÉHICULE ASSOCIÉ**
SCHALTGETRIEBE FÜR FAHRZEUG UND ENTSPRECHENDES FAHRZEUG
GEARBOX FOR A VEHICLE AND ASSOCIATED VEHICLE

(30) Priorité: 11.02.2019 FR 1901345
(43) Date de publication de la demande: 12.08.2020
(73) Titulaire: ALSTOM Transport Technologies, 93400 Saint-Ouen (FR)
(72) Inventeur: NEUROUTH, Adrien, 71200 LE CREUSOT (FR); MARQUETOUT, Cédrik, 71200 LE CREUSOT (FR)
(74) Mandataire: Lavoix

(56) Documents cités:
- EP-A1- 1 775 500
- EP-A1- 2 600 037
- DE-B- 1 047 820
- GB-A- 1 214 782

## Description

La présente invention concerne une boîte de vitesses pour véhicule, notamment pour véhicule ferroviaire, étant selon le préambule de la revendication 1. L'invention s'applique au domaine du transport, en particulier des véhicules ferroviaires. Elle s'applique notamment aux boîtes de vitesse pour locomotives et plus particulièrement aux réducteurs de ces boîtes de vitesse.

On entend par « barbotage » d'une roue dentée dans une huile, le fait que la roue dentée baigne partiellement dans l'huile et est donc constamment arrosée par l'huile.

Il est connu différents types de lubrification pour les systèmes d'engrènement d'une boîte de vitesses.

L'un des plus courant est notamment la lubrification par barbotage.

Toutefois, ce type de lubrification fait baisser le rendement de la boîte de vitesses, notamment à cause du frottement visqueux engendré par le barbotage des roues dentées dans l'huile qui induit l'échauffement de l'huile.

Une alternative pour éviter le barbotage des roues dentées est de récupérer via une pompe l'huile de lubrification dans un réservoir annexe placé en hauteur, et de lubrifier les roues dentées par écoulement gravitaire. De plus, la lubrification peut être adaptée à la vitesse de rotation des roues dentées en contrôlant l'écoulement.

Une boîte de vitesse utilisant un tel type de lubrification est décrite dans le document EP 1 775 500.

La lubrification telle que décrite dans le document repose sur l'utilisation d'une pompe. En cas de panne de cette dernière, la lubrification n'est plus assurée et la boîte de vitesses risque d'être endommagée.

Le document GB 1 214 782 A décrit une boîte de vitesse pour véhicule comprenant un réservoir et un dispositif de débordement et utilisant une lubrification par écoulement gravitaire à l'aide d'une pompe. Le document DE 10 47 820 B décrit une boîte de vitesse pour véhicule utilisant une lubrification à la fois par écoulement gravitaire à l'aide d'une pompe et par effet de pelle d'une roue dentée barbotant dans l'huile au fond du carter.

L'invention a pour but de proposer une boîte de vitesses utilisant un type de lubrification affectant très peu le rendement de la boîte de vitesses, tout en assurant sa fiabilité.

A cet effet, l'invention a pour objet une boîte de vitesses selon la revendication 1.

Suivant certains modes de réalisation, la boîte de vitesses comporte l'une ou plusieurs des caractéristiques des revendications 2 à 7.

La présente invention concerne aussi un véhicule, notamment véhicule ferroviaire, selon la revendication 8 .

L'invention sera mieux comprise à la lecture de la description qui va suivre, donnée uniquement à titre d'exemple, se référant à :

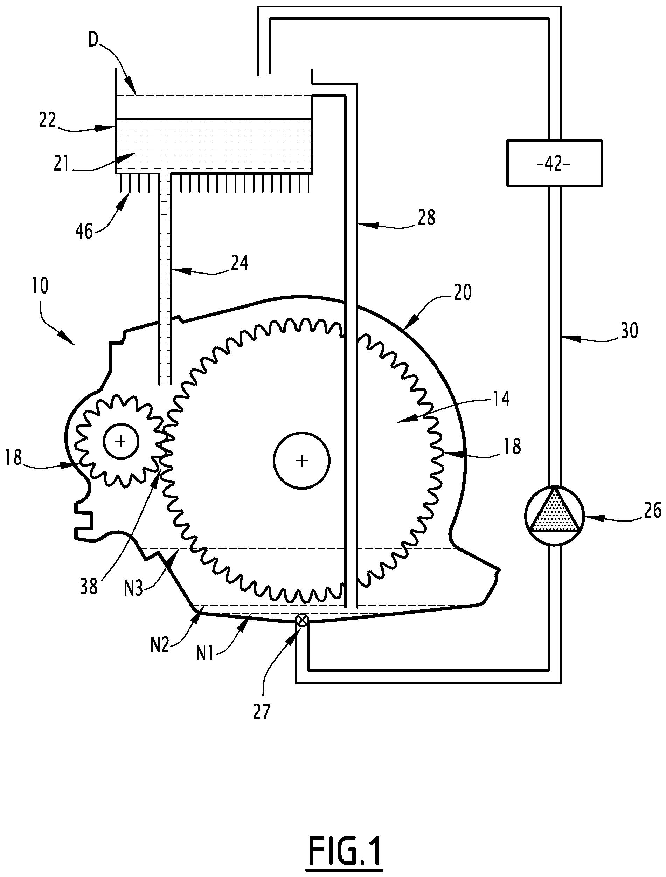

- [Fig 1] la figure unique qui est une vue schématique d'une boîte de vitesses pour véhicule selon l'invention.

La boîte de vitesses 10 d'un véhicule ferroviaire est illustrée sur la figure, entre un moteur et des roues motrices.

La boîte de vitesses 10 comprend un système d'engrènement 14 comportant au moins deux roues dentées 18 engrenées, et contenu dans un carter 20. Le carter 20 est propre à récupérer au fond une huile de lubrification 21, propre à lubrifier le système d'engrènement 14.

Le système d'engrènement 14 est connu en soi, et est par exemple, un réducteur. Le système d'engrènement 14 est apte à fonctionner dans les deux sens de marche de la boîte de vitesses 10.

La boîte de vitesses 10 comprend aussi un réservoir 22 apte à contenir une quantité d'huile de lubrification 21 jusqu'à une hauteur de débordement D prédéfinie. Il est par exemple, situé à l'extérieur et au-dessus du carter 20.

En variante, le réservoir 22 est situé à l'intérieur du carter 20, au-dessus du système d'engrènement 14.

Au moins une buse 24 est connectée en dessous du réservoir 22 et est configurée pour délivrer l'huile de lubrification 21 du réservoir 22 au système d'engrènement 14 sous l'action de la gravité.

Une pompe 26 de relevage est située entre le carter 20 et le réservoir 22. Elle est apte à remonter l'huile de lubrification 21 depuis le carter 20 jusqu'au réservoir 22, par exemple à travers un conduit reliant le carter 20 au réservoir 22.

Avantageusement, la pompe 26 est apte à remonter l'huile de lubrification 21 du carter 20 depuis un point de prélèvement 27, le point de prélèvement 27 étant situé plus bas que les roues dentées 18. Dans ce cas-là, le conduit reliant le carter 20 au réservoir 22 est, par exemple, connecté au carter 20 via le point de prélèvement 27 situé dans le fond du carter 20.

Le débit de la pompe 26 est supérieur au débit total de la ou chaque buse 24 pour assurer à tout instant de fonctionnement normal un niveau d'huile dans le fond du carter inférieur à un niveau N2, niveau en dessous duquel le système d'engrènement 14 ne barbote plus dans l'huile contenue au fond du carter 20.

La boîte de vitesses 10 comporte en outre, un dispositif de débordement 28 configuré pour assurer l'écoulement de l'huile de lubrification 21 du réservoir 22 vers le carter 20 lorsque le niveau d'huile dans le réservoir 22 atteint la hauteur de débordement D.

La hauteur de débordement D est choisie préalablement de sorte que, lorsque le débit de l'huile de lubrification 21 dans la buse 24 est trop faible (cela peut être dû au fait que la viscosité de l'huile de lubrification 21 est plus importante à froid), le dispositif de débordement 28 est apte à assurer un niveau d'huile minimum N1 dans le fond du carter 20, afin que la pompe 26 soit constamment alimentée en huile de lubrification 21. Le dispositif de débordement 28 comporte par exemple un conduit reliant le réservoir 22 et le fond du carter 20, dont l'entrée est placée sur le réservoir 22, à la hauteur de débordement D.

L'huile de lubrification 21 est en quantité suffisante dans la boîte de vitesses 10 pour assurer en étant à un niveau N3 au fond du carter 20, le barbotage d'au moins une roue dentée 18 lorsque la pompe 26 est arrêtée et que l'huile de lubrification 21 est entièrement contenue dans le fond du carter 20, le réservoir étant vide.

La ou chaque buse 24 délivre de préférence l'huile de lubrification 21 soit vers un point engrènement 38 entre deux roues dentées 18, soit une entrée d'une goulotte propre à délivrer l'huile de lubrification 21 à des roulements d'une roue dentée 18.

En complément facultatif, la boîte de vitesses 10 comporte un échangeur 42 positionné entre le fond du carter 20 et le réservoir 22 sur le trajet de la pompe de relevage 26, et configuré pour évacuer au moins partiellement une chaleur dissipée par l'huile de lubrification 21 remontée par la pompe 26. Il est par exemple placé sur le conduit reliant le carter 20 et le réservoir 22. L'échangeur 42 est par exemple un échangeur air-huile.

En complément facultatif, le réservoir 22 comporte des ailettes de refroidissement 46 aptes à évacuer au moins partiellement une chaleur dissipée par l'huile de lubrification 21 contenue dans le réservoir 22.

La boîte de vitesses 10 fonctionne, en conditions normales, sous un premier mode de fonctionnement normal.

Dans ce premier mode de fonctionnement, l'huile de lubrification 21 est acheminée en continue du réservoir 22 vers chaque point de lubrification 38 du système d'engrènement 14 par écoulement gravitaire à travers la ou les buses 24.

L'huile de lubrification 21 est collectée dans le fond du carter 20.

Elle est remontée jusqu'au réservoir 22 à l'aide de la pompe 26. La pompe 26 assure un niveau dans le carter 20 suffisamment bas pour qu'il n'y ait pas barbotage avec les roues dentées 18 (niveau d'huile dans le carter 20 en dessous du niveau N2).

Si le niveau d'huile dans le réservoir 22 dépasse la hauteur de débordement D prédéfinie, l'huile de lubrification 21 s'écoule directement à travers le dispositif de débordement 28 jusqu'au fond du carter 20, afin d'assurer un niveau minimum d'huile N1 dans le fond du carter 20, pour que la pompe 26 soit constamment alimentée en huile et ne soit pas désamorcée.

Lorsque la pompe 26 est arrêtée, par exemple lorsqu'elle est hors service, la boîte de vitesses 10 fonctionne sous un deuxième mode de fonctionnement de barbotage.

Dans ce deuxième mode de fonctionnement, la pompe 26 est à l'arrêt et ne remonte plus l'huile de lubrification 21. Toute l'huile de lubrification 21 est alors récupérée dans le carter 20 après s'être écoulée dans la buse 24. Le réservoir 22 est alors vide, et la buse 24 et le dispositif de débordement 28 ne sont plus utilisés. Le système d'engrènement 14 est alors lubrifié par barbotage, en baignant dans l'huile de lubrification 21 contenue dans le fond du carter 20, le niveau d'huile étant dans ce cas au niveau N3.

En fonctionnement normal, la boîte de vitesses 10 fonctionne donc en assurant une lubrification du système d'engrènement 14 avec un rendement satisfaisant.

Le second mode de fonctionnement, dit de barbotage, permet d'assurer la lubrification du système d'engrènement 14, même si la pompe 26 est hors service, au détriment d'une perte de rendement.

Le dispositif de débordement 28 permet d'assurer que la pompe 26 soit toujours alimentée et d'éviter son endommagement.

L'utilisation du système de refroidissement 42 ou des ailettes de refroidissement 46 permet de refroidir l'huile de lubrification 21 en circulation, et ainsi d'éviter l'échauffement de l'huile et du système d'engrènement 14.

## Revendications

1. Boîte de vitesses (10) pour véhicule comportant :
- un système d'engrènement (14) comprenant au moins deux roues dentées (18) engrenées,
- un carter (20) dans lequel est situé le système d'engrènement (14), configuré pour récupérer une huile de lubrification (21) apte à lubrifier le système d'engrènement (14),
- un réservoir (22) d'huile situé en hauteur par rapport au système d'engrènement (14),
- au moins une buse (24) située en dessous du réservoir (22) et configurée pour délivrer l'huile de lubrification (21) du réservoir (22) au système d'engrènement (14) sous l'action de la gravité,
- une pompe (26) de relevage de l'huile de lubrification (21) depuis le carter (20) jusqu'au réservoir (22), et
- un dispositif de débordement (28) configuré pour assurer l'écoulement de l'huile de lubrification (21) en excès du réservoir (22) vers le carter (20) lorsque le niveau d'huile dans le réservoir (22) atteint une hauteur de débordement (D) prédéfinie, **caractérisée en ce qu'**elle comprend une quantité d'huile de lubrification (21) suffisante pour assurer une alimentation continue de la pompe (26) via le dispositif de débordement (28) lorsque le réservoir (22) est plein jusqu'à la hauteur de débordement (D), et suffisante pour assurer le barbotage d'au moins une roue dentée (18) dans l'huile de lubrification (21) contenue dans le fond du carter (20) lorsque la pompe (26) est arrêtée, la pompe (26) en fonctionnement assurant un niveau dans le carter (20) suffisamment bas pour qu'il n'y ait pas barbotage avec les roues dentées (18).

2. Boîte de vitesses (10) selon la revendication 1 , dans laquelle le dispositif de débordement (28) comporte un conduit de transport de l'huile de lubrification (21) en excès propre à assurer l'écoulement de l'huile de lubrification (21), directement du réservoir (22) vers le fond du carter (20) lorsque le niveau d'huile dans le réservoir (22) atteint la hauteur de débordement (D).

3. Boîte de vitesses (10) selon la revendication 1 ou 2, dans laquelle la pompe (26) est propre à remonter l'huile de lubrification (21) du carter (20) depuis un point de prélèvement (27), le point de prélèvement (27) étant situé plus bas que les roues dentées (18).

4. Boîte de vitesses (10) selon l'une quelconque des revendications précédentes, dans laquelle la ou chaque buse (24) est dirigé soit vers un point d'engrènement (38) entre deux roues dentées (18), soit vers l'entrée d'une goulotte configurée pour délivrer l'huile de lubrification (21) à des roulements d'une roue dentée (18).

5. Boîte de vitesses (10) selon l'une quelconque des revendications précédentes, dans laquelle il comporte un échangeur (42) positionné entre le fond du carter (20) et le réservoir (22) sur le trajet de la pompe de relevage (26), et configuré pour évacuer au moins partiellement une chaleur dissipée par l'huile de lubrification (21) remontée par la pompe (26).

6. Boîte de vitesses (10) selon l'une quelconque des revendications précédentes, dans laquelle le réservoir (22) comporte des ailettes de refroidissement (46), configurées pour évacuer au moins partiellement une chaleur dissipée par l'huile de lubrification (21) dans le réservoir (22).

7. Boîte de vitesses (10) selon l'une quelconque des revendications précédentes, dans laquelle le débit de la pompe (26) de relevage est supérieur au débit total de la ou chaque buse (24).

8. Véhicule comportant une boîte de vitesses (10), **caractérisé en ce que** la boîte de vitesses (10) est selon l'une quelconque des revendications précédentes.

## Patentansprüche

1. Getriebe (10) für ein Fahrzeug, umfassend:
- ein Zahneingriffssystem (14) umfassend mindestens zwei ineinandergreifende Zahnräder (18),
- ein Gehäuse (20), in dem sich das Zahneingriffssystem (14) befindet und das konfiguriert ist, um ein Schmieröl (21) aufzufangen, das angepasst ist, um das Zahneingriffssystem (14) zu schmieren,
- einen Behälter (22) für Öl, der in Bezug auf das Zahneingriffssystem (14) in der Höhe angeordnet ist,
- mindestens eine Düse (24), die sich unterhalb des Behälters (22) befindet und die konfiguriert ist, um Schmieröl (21) unter der Wirkung der Schwerkraft aus dem Behälter (22) zu dem Zahneingriffssystem (14) zuzuführen,
- eine Pumpe (26) zum Heben des Schmieröls (21) aus dem Kurbelgehäuse (20) bis zu dem Behälter (22), und
- eine Überlaufvorrichtung (28), die konfiguriert ist, um das Abfließen von überschüssigem Schmieröl (21) aus dem Behälter (22) zu dem Kurbelgehäuse (20) zu gewährleisten, wenn der Ölstand in dem Behälter (22) eine vordefinierte Überlaufhöhe (D) erreicht, **dadurch gekennzeichnet, dass** sie eine Menge an Schmieröl (21) umfasst, die ausreichend ist, um eine kontinuierliche Versorgung der Pumpe (26) über die Überlaufvorrichtung (28) zu gewährleisten, wenn der Behälter (22) bis zu der Überlaufhöhe (D) gefüllt ist und ausreichend ist, um bei abgeschalteter Pumpe (26) eine Tauchschmierung von mindestens einem Zahnrad (18) in dem in dem Boden des Gehäuses (20) enthaltenen Schmieröl (21) zu gewährleisten, wobei die Pumpe (26) im Betrieb einen ausreichend niedrigen Stand in dem Gehäuse (20) gewährleistet, damit es keine Tauchschmierung mit den Zahnrädern (18) gibt.

2. Getriebe (10) nach Anspruch 1, wobei die Überlaufvorrichtung (28) eine Förderleitung von überschüssigem Schmieröl (21) umfasst, die angepasst ist, um das Abfließen des Schmieröls (21) direkt aus dem Behälter (22) zu dem Boden des Gehäuses (20) zu gewährleisten, wenn der Ölstand in dem Behälter (22) die Überlaufhöhe (D) erreicht.

3. Getriebe (10) nach Anspruch 1 oder 2, **dadurch gekennzeichnet, dass** die Pumpe (26) angepasst ist, um Schmieröl (21) von einer Entnahmestelle (27) aus dem Gehäuse (20) anzusaugen, wobei die Entnahmestelle (27) tiefer liegt als die Zahnräder (18).

4. Getriebe (10) nach einem der vorherigen Ansprüche, wobei die oder jede Düse (24) entweder auf einen Eingriffspunkt (38) zwischen zwei Zahnrädern (18) oder auf den Einlass einer Rutsche gerichtet ist, die konfiguriert ist, um Schmieröl (21) zu Lagern eines Zahnrads (18) zuzuführen.

5. Getriebe (10) nach einem der vorherigen Ansprüche, wobei es einen Wärmetauscher (42) umfasst, der zwischen dem Boden des Gehäuses (20) und dem Behälter (22) in dem Weg der Hebepumpe (26) positioniert und konfiguriert ist, um mindestens teilweise eine Wärme abzuführen, die durch das von der Pumpe (26) angehobene Schmieröl (21) abgegeben wird.

6. Getriebe (10) nach einem der vorherigen Ansprüche, wobei der Behälter (22) Kühlrippen (46) umfasst, die konfiguriert sind, um eine durch das Schmieröl (21) in dem Behälter (22) abgegebene Wärme mindestens teilweise abzuführen.

7. Getriebe (10) nach einem der vorherigen Ansprüche, wobei die Förderleistung der Hebepumpe (26) größer ist als die Gesamtförderleistung der oder jeder Düse (24).

8. Fahrzeug, umfassend ein Getriebe (10), **dadurch gekennzeichnet, dass** das Getriebe (10) nach einem der vorherigen Ansprüche ist.

## Claims

1. A gearbox (10) for a vehicle comprising:
- a gear system (14) comprising at least two meshing gears (18),
- a housing (20) in which the gear system (14) is located, configured to recover a lubricating oil (21) suitable for lubricating the gear system (14),
- an oil reservoir (22) located higher than the gear system (14),
- at least one nozzle (24) located below the reservoir (22) and configured to deliver the lubricating oil (21) from the reservoir (22) to the gear system (14) under the action of gravity,
- a pump (26) for raising the lubricating oil (21) from the housing (20) to the reservoir (22), and
- an overflow device (28) configured to ensure the flow of excess lubricating oil (21) from the reservoir (22) to the housing (20) when the oil level in the reservoir (22) reaches a predefined overflow height (D), **characterised in that** it comprises a quantity of lubricating oil (21) sufficient to ensure continuous supply to the pump (26) via the overflow device (28) when the reservoir (22) is full up to the overflow height (D) and sufficient to ensure the immersion of at least one gear (18) into the lubricating oil (21) contained in the bottom of the housing (20) when the pump (26) is stopped, the pump (26), when in operation, ensuring a sufficiently low level in the housing (20) that the gears (18) are not immersed.

2. A gearbox (10) according to claim 1, wherein the overflow device (28) comprises a conduit for conveying excess lubricating oil (21), suitable for ensuring the flow of lubricating oil (21) directly from the reservoir (22) to the bottom of the housing (20) when the oil level in the reservoir (22) reaches the overflow height (D).

3. A gearbox (10) according to claim 1 or 2, wherein the pump (26) is adapted to raise lubricating oil (21) from the housing (20) from a draw-off point (27), the draw-off point (27) being located lower than the gears (18).

4. A gearbox (10) according to any one of the preceding claims, wherein the or each nozzle (24) is directed either to a point of engagement (38) between two gears (18) or to the inlet of a chute configured to deliver lubricating oil (21) to bearings of a gear (18).

5. A gearbox (10) according to any one of the preceding claims, wherein it comprises an exchanger (42) positioned between the bottom of the housing (20) and the reservoir (22) in the path of the raising pump (26), and configured to at least partially remove a heat dissipated by the lubricating oil (21) raised by the pump (26).

6. A gearbox (10) according to any one of the preceding claims, wherein the reservoir (22) has cooling fins (46), configured to at least partially remove a heat dissipated by the lubricating oil (21) in the reservoir (22).

7. A gearbox (10) according to any of the preceding claims, wherein the flow rate of the raising pump (26) is greater than the total flow rate of the or each nozzle (24).

8. A vehicle comprising a gearbox (10), **characterized in that** the gearbox (10) is according to any of the preceding claims.
